# EUROPÄISCHE PATENTSCHRIFT

(11) **EP 1 864 566 B1**
(45) Veröffentlichungstag und Bekanntmachung des Hinweises auf die Patenterteilung: **06.01.2010**
(21) Anmeldenummer: 07108575.7
(22) Anmeldetag: 22.05.2007
(51) Int. Cl.: A01D 41/12, A01F 12/44

(54) **Mähdrescher mit einer Körner abscheidenden Fördereinrichtung zwischen der Reinigungseinrichtung und einem Abgabeförderer für Spreu**
Combine harvester with a conveyor device to separate grain between the cleaning device and the discharge device for chaff
Moissonneuse-batteuse dotée d'un transporteur séparateur de grains entre le dispositif de nettoyage et le distributeur de vannure

(30) Priorität: 10.06.2006 DE 102006027079
(43) Veröffentlichungstag der Anmeldung: 12.12.2007
(73) Patentinhaber: Deere & Company, Moline, IL 61265-8098 (US)
(72) Erfinder: Priesnitz, Rico, 66822, Lebach (DE)
(74) Vertreter: Holst, Sönke

(56) Entgegenhaltungen:
- EP-A- 1 461 991
- EP-A- 1 614 339
- EP-A2- 1 425 956
- US-A- 4 711 253

## Beschreibung

Die Erfindung betrifft einen Mähdrescher mit einer Drescheinrichtung, einer Trenneinrichtung, einer Reinigungseinrichtung, einem zur Verteilung der von der Reinigungseinrichtung abgegebenen Spreu über ein Feld dienenden Abgabeförderer und einer von der Reinigungseinrichtung getrennten Spreufördereinrichtung zur mechanischen Förderung der von der Reinigungseinrichtung abgegebenen Spreu zum Abgabeförderer.

### Stand der Technik

Mähdrescher dienen in der Landwirtschaft zur Ernte von körnerhaltigem Erntegut. Ein Schneidwerk oder anderer, geeigneter Erntevorsatz erntet auf einem Feld stehende Pflanzen und führt die abgeschnittenen Pflanzen oder ihre Fruchtstände einer Drescheinrichtung zu. Die ausgedroschenen Körner werden einer Reinigungseinrichtung zugeführt, die Spreu und das Kaff abtrennt und die Körner in einen Korntank abgibt. Die Drescheinrichtung führt die Pflanzenreste einer Trenneinrichtung zu, die weitere Körner aus den Pflanzenresten trennt und die Körner der Reinigungseinrichtung übergibt. Die Trenneinrichtung gibt die verbleibenden Pflanzenreste direkt auf das Feld ab oder führt sie einem Strohhäcksler zu. Die Spreu wird in der Regel über die Arbeitsbreite des Erntevorsatzes auf dem Feld verteilt, wozu in der Regel ein separater, als Gebläse ausgestalteter Spreuverteiler oder der Strohhäcksler dient.

Die Spreu wird einem Spreuverteiler von der Reinigungseinrichtung üblicherweise durch den Reinigungswind (DE 197 50 393 A) oder durch eine Schurre (DE 103 23 830 A) zugeführt.

Es wurden verschiedene Mähdrescher beschrieben, bei denen die Spreu aus der Reinigungseinrichtung durch Förderer in den Strohhäcksler gefördert wird, um sie ohne separate Spreuverteiler auf dem Feld zu verteilen:

Die US 4 913 679 A beschreibt einen Mähdrescher mit einer Trenneinrichtung in Form von Strohschüttlern, eine Reinigungseinrichtung zur Reinigung des ausgedroschenen Korns und einen Strohhäcksler mit einer quer zur Fahrtrichtung angeordneten Drehachse. Der Strohhäcksler umfasst eine obere Einführöffnung, durch die das Stroh von den Strohschüttlern und die durch einen Gurtförderer von einem Auslass der Reinigungseinrichtung herantransportierte Spreu in den Strohhäcksler gelangen.

Ein Mähdrescher, bei dem die Spreu durch einen Gurtförderer von der Reinigung in den Strohhäcksler gefördert wird, ist in der US 5 232 405 A beschrieben.

In der US 3 669 123 A und der US 3 103 241 A werden Mähdrescher beschrieben, bei denen die Spreu durch eine mit der Reinigungseinrichtung vibrierende Rutsche mit glatter oder gezahnter Oberfläche (US 3669 123 A) oder nach unten geschlossene Leitung mit sägezahnförmigen Erhebungen (US 3 103 241 A) von der Reinigungseinrichtung in den Strohhäcksler gefördert wird.

Die EP 0 702 892 A beschreibt einen anderen Mähdrescher, bei dem unterhalb des Endes der als Rotoreinheit oder Strohschüttler ausgeführten Trenneinrichtung ein trichterförmiges Gehäuse angeordnet ist. Ein quer angeordneter Schneckenförderer oder ein Gurtförderer verbringt das von oben in das Gehäuse fallende Stroh zu einem oder zwei Auslässen des Gehäuses, unter denen sich eine Schneid- und Wurfeinrichtung befindet, die sich aus einer um die Hochachse drehenden Achse, daran befestigten, plattenförmigen Schlägern und am äußeren Ende der Schläger pendelnd angeordneten Schlegeln zusammensetzt, die mit feststehenden Gegenmessern kämmen. Ein exakt horizontal angeordneter Eingabeboden gibt Spreugut vom Siebkasten in das trichterförmige Gehäuse ab.

Die DE 102 56 744 A beschreibt einen Mähdrescher, bei dem ein in eine Schwingbewegung bringbarer Schwingboden die Spreu von der Reinigungseinrichtung in den Häckslereinlass des Strohhäckslers transportiert.

Die EP 1 316 249 A beschreibt einen Mähdrescher mit einem wegschwenkbaren Kaffförderboden zwischen dem Auslass der Reinigung und dem Einlass des Strohhäckslers.

Es wurde außerdem vorgeschlagen (EP 0 181 500 A, EP 0 727 135 A, WO 01/01754 A, DE 100 64 356 A, EP 1 461 993 A, EP 1 461 994 A, EP 1 529 434 A), die Spreu durch Gebläse von der Reinigungseinrichtung in den Strohhäcksler zu fördern.

Die im Stand der Technik bekannten Fördereinrichtungen zwischen der Reinigungseinrichtung und dem Spreuverteiler oder Strohhäcksler dienen somit lediglich zur Förderung der Spreu.

Die DE 82 02 574 U beschreibt einen Mähdrescher mit einer Strohleiteinrichtung zum Transport des Strohs vom abgabeseitigen Ende des Strohschüttlers zum Einlass des Strohhäckslers. Die Strohleiteinrichtung setzt sich aus quer zur Förderrichtung in Abständen nebeneinander angeordneten Trag- und Förderelementen zusammen, die zwischen sich Längsschlitze freilassen, durch die im abgegebenen Stroh noch enthaltene Körner nach unten in den Siebkasten fallen können. Der Siebkasten erstreckt sich aber nur über etwa die Hälfte der Länge der Strohleiteinrichtung, so das in der hinteren Hälfte der Strohleiteinrichtung freigegebene Körner nach unten auf das Feld fallen und dort als Verlustkörner zu unerwünschtem Saataufgang führen können.

### Aufgabe

Ein Problem der bekannten Mähdrescher liegt darin, dass die Abscheidefläche der Reinigungseinrichtung durch die Abmessungen des Mähdreschers begrenzt ist. Diese Abmessungen sind ihrerseits durch gesetzliche Bestimmungen eingeschränkt. Es ist somit problematisch, bei den derzeit immer weiter steigenden Schnittbreiten der Erntevorsätze und daraus resultierenden Durchsätzen der Mähdrescher die gewünschten Verlustkornmengen, die näherungsweise im reziproken Verhältnis zur Abscheidefläche stehen, einzuhalten.

Die der Erfindung zu Grunde liegende Aufgabe wird darin gesehen, einen verbesserten Mähdrescher bereitzustellen, der eine vergrößerte Abscheidefläche aufweist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Mähdrescher umfasst in an sich bekannter Weise eine Drescheinrichtung, eine Trenneinrichtung und eine Reinigungseinrichtung. Die von der Reinigungseinrichtung abgegebene Spreu wird durch eine mechanisch auf die Spreu einwirkende, von der Reinigungseinrichtung getrennte Spreufördereinrichtung einem Abgabeförderer zugeführt, der sie wiederum auf dem Feld verteilt, in der Regel über die Arbeitsbreite eines Erntevorsatzes des Mähdreschers. Es wird vorgeschlagen, dass die Spreufördereinrichtung zur Abscheidung von noch in der Spreu enthaltenen Körnern ausgelegt wird. Der Spreufördereinrichtung wird ferner eine Rückführeinrichtung zugeordnet, die durch die Spreufördereinrichtung aus der Spreu abgeschiedene Körner wiederum direkt oder indirekt zurück zur Reinigungseinrichtung fördert.

Auf diese Weise erzielt man eine Vergrößerung der Abscheidefläche des Mähdreschers, ohne seine Baugröße zu vergrößern oder den zwischen den Hinterrädern des Mähdreschers zur Verfügung stehenden Raum einzuschränken. Bei gegebenem Durchsatz wird die Verlustkornmenge reduziert. Alternativ kann der Durchsatz vergrößert werden, insbesondere bei Axial- oder Hybridmähdreschern, ohne die Verlustkornmenge zu erhöhen.

Der erwähnte Abgabeförderer kann ein Spreuverteiler oder ein Strohhäcksler sein.

Die Abscheidung der Körner kann dadurch erzielt werden, dass die Spreufördereinrichtung in der Art eines Siebs einer Reinigungseinrichtung mit einem Abscheidebelag mit einer Vielzahl von Öffnungen mit fest vorgegebener oder zur Anpassung an unterschiedliche Fruchtarten verstellbarer Öffnungsgröße ausgestattet ist, die dem Durchtritt von abzuscheidendem Gut, z. B. Körner, Ähren oder Ährenbestandteilen dienen. Abscheidebeläge mit fest vorgegebenen Öffnungsgrößen können zur Anpassung an unterschiedliche Fruchtarten mit Abscheidebelägen anderer Öffnungsgröße austauschbar sein. Die Öffnungen könnten aber auch zwischen sich in Vorwärtsrichtung erstreckenden Stäben oder dergleichen gebildet sein, wie in der DE 82 02 574 U beschrieben. Zur Verbesserung der Materialförderung kann die Spreufördereinrichtung an ihrer Oberseite sägezahnförmige Stege aufweisen, deren längere Flanken schräg nach hinten ansteigen, während die demgegenüber kürzeren Flanken relativ steil nach hinten abfallen.

Die Spreufördereinrichtung wird im Betrieb vorzugsweise in eine oszillierende Schwingbewegung versetzt. Dazu kann sie antriebsmäßig mit einem Sieb der Reinigungseinrichtung gekoppelt werden und sich gemeinsam mit dem Sieb bewegen.

Die Rückfördereinrichtung kann die abgeschiedenen Körner in der Reinigungseinrichtung einer Überkehrfördereinrichtung aufgeben, welche sie einer Dreschvorrichtung aufgibt, oder sie direkt, d. h. durch einen separaten Förderer, der Dreschvorrichtung zuführen, von der sie (dann indirekt) in die Reinigungseinrichtung zurück gelangen. Es wäre auch denkbar, dass die Rückfördereinrichtung die Körner, insbesondere bei hinreichender Siebwirkung der Spreufördereinrichtung, in der Reinigungseinrichtung einem Körnerelevator aufgibt, der sie direkt in den Korntank des Mähdreschers fördert. Es wäre auch möglich, die Körner von der Rückfördereinrichtung in den Einlass der Reinigungseinrichtung zu fördern, in den die Körner von der Dresch- oder Trenneinrichtung gelangen, beispielsweise indem sie einem unterhalb der Dresch- oder Trenneinrichtung angeordneten Förderboden aufgegeben werden.

Die Rückfördereinrichtung umfasst vorzugsweise einen in eine Schwingbewegung bringbaren Förderboden. Es bietet sich an, ihn antriebsmäßig mit der Spreufördereinrichtung zu koppeln. Denkbar ist aber auch die Verwendung beliebiger anderer Ausführungsformen, wie Schnecken- oder Gurtförderern.

Die Abscheidewirkung der Spreufördereinrichtung kann dadurch verbessert werden, dass sie von unten her mit Reinigungswind beaufschlagt wird. Ein einlassseitig an der Unterseite der Spreufördereinrichtung angebrachtes Leitblech kann den Wind von der Reinigung zur Unterseite der Spreufördereinrichtung lenken.

Um unerwünschte Windverluste zu vermeiden, bietet es sich an, eine Dichtung zwischen dem Reinigungsgehäuse und der Unterseite der oszillierenden Rückfördereinrichtung anzubringen.

### Ausführungsform

In den Zeichnungen sind zwei nachfolgend näher beschriebene Ausführungsbeispiele der Erfindung dargestellt. Es zeigt:
- Fig. 1: eine schematische Seitenansicht eines Mähdreschers mit einem Axialabscheider und einem Strohhäcksler, der zum Ausbringen der Spreu dient,
- Fig. 2: eine seitliche Ansicht der Spreufördereinrichtung, die in dem Mähdrescher aus Figur 1 die Spreu in den Strohhäcksler fördert, und der darunter angeordneten Rückfördereinrichtung,
- Fig. 3: eine seitliche Ansicht eines Mähdreschers nach einer zweiten Ausführungsform der Erfindung, bei der ein Spreuverteiler die Spreu ausbringt.

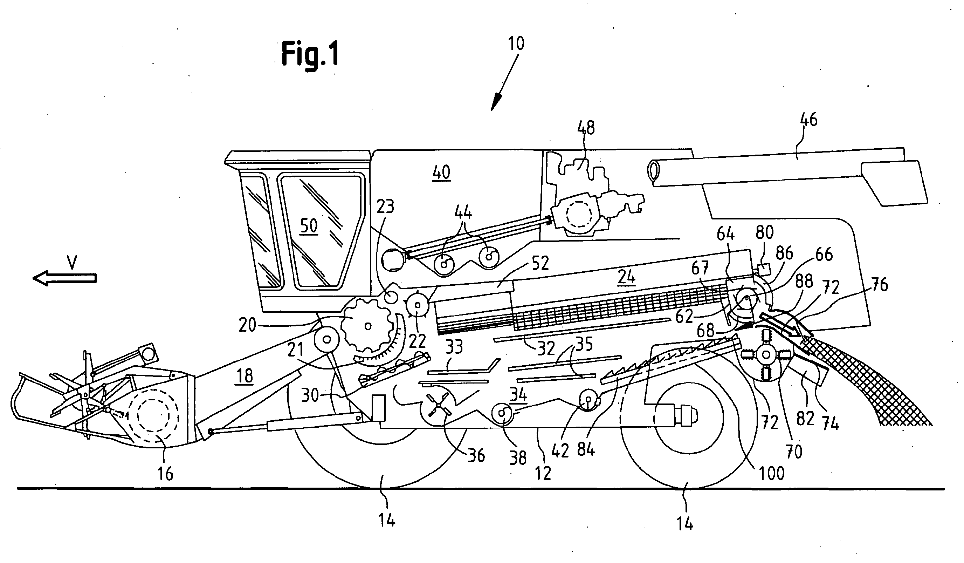

Die Figur 1 zeigt einen selbstfahrenden Mähdrescher 10 mit einem Tragrahmen 12, der sich über vordere, angetriebene und hintere lenkbare Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung in Form eines Schneidwerks 16 angeschlossen, um Erntegut von dem Feld zu ernten und es nach oben und hinten durch einen Schrägförderer 18 Dresch- und Abscheidemitteln zuzuführen. Die Dresch- und Abscheidemittel umfassen eine Drescheinrichtung 20 mit einer quer angeordneten Dreschtrommel und einen dieser zugeordneten Dreschkorb 21, denen das geerntete Gut zuerst zugeführt wird. Es ist aber auch denkbar, die Dreschtrommel der Drescheinrichtung 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Auch die Verwendung von stromab einer Dreschtrommel angeordneten Strohschüttlern oder Abscheidetrommeln als Abscheidemittel ist denkbar. Eine Abstreifrolle 23 und eine Wendetrommel 22 führen gemeinsam mit einem Zufuhrgehäuse das gedroschene Erntegut von der Drescheinrichtung 20 und dem Dreschkorb 21 einer Trenneinrichtung 24 in Form eines Axialabscheiders zu. Der Axialabscheider wird an seiner Rückseite durch ein Getriebe 80 angetrieben. Im Folgenden beziehen sich alle Richtungsangaben, wie vorn, hinten, ober- und unterhalb auf die Vorwärtsfahrtrichtung V des Mähdreschers 10.

Körner und Spreu, die während des Dreschvorgangs abgeschieden werden, fallen auf wenigstens einen Schneckenförderer 30, der beides einem Vorbereitungsboden 33 zuführt. Körner und Spreu, die hingegen aus der Trenneinrichtung 24 austreten, fallen auf einen Schüttelboden 32, der sie zur Weitergabe auf den Vorbereitungsboden 33 führt. Der Vorbereitungsboden 33 gibt die Körner und die Spreu einer Reinigungseinrichtung 34 mit darin angeordneten Sieben 35 weiter, der ein Gebläse 36 zugeordnet ist, um die Abscheidung der Spreu von den Körnern zu unterstützen. Gereinigte Körner werden mittels einer Körnerschnecke 38 einem nicht gezeigten Elevator zugeführt, der sie in einen Korntank 40 befördert. Eine Überkehrschnecke 42 gibt unausgedroschene Ährenteile durch einen weiteren nicht gezeigten Elevator zurück in den Dreschprozess, d. h. führt sie wieder der Drescheinrichtung 20 zu. Die Spreu wird an der Rückseite der Reinigungseinrichtung 34 auf eine sich in einer Schwingbewegung befindliche Spreufördereinrichtung 84 ausgeworfen. Die gereinigten Körner aus dem Korntank 40 können durch ein Entladesystem mit Querschnecken 44 und einem Entladeförderer 46 entladen werden.

Die genannten Systeme werden mittels eines Verbrennungsmotors 48 angetrieben und von einer Bedienungsperson aus einer Fahrerkabine 50 heraus kontrolliert. Die verschiedenen Vorrichtungen zum Dreschen, Fördern, Reinigen und Abscheiden befinden sich innerhalb des Tragrahmens 12.

Vom Axialabscheider der Trenneinrichtung 24 (oder einer der anderen oben genannten, alternativ verwendbaren Trenneinrichtungen), wird ein erster Erntegutrestestrom, der im Wesentlichen aus ausgedroschenen Erntegutresten (Stroh) besteht, durch einen Auslass 64 an der Unterseite des rückwärtigen Endes der nach hinten geschlossenen

Trenneinrichtung 24 nach unten ausgeworfen. Durch die Wirkung der Fliehkraft und der Schwerkraft fallen die Erntegutreste in einen vertikalen Auswurfschacht, der nach vorn durch eine vordere Wand 62 begrenzt wird. Unterhalb des Auslasses 64 ist eine Auswurftrommel 66 angeordnet, um deren Umfang Mitnehmer 67 verteilt sind. Nach hinten ist die Auswurftrommel 66 von einer rückwärtigen Wand 86 eingeschlossen. Die Auswurftrommel 66 wird um ihre Längsachse, die sich quer zur Fahrtrichtung erstreckt, durch einen Antrieb in Drehung versetzt, in Figur 1 im Gegenuhrzeigersinn. Etwa auf der halben Höhe der vorderen Wand 62 liegt an ihr, etwa unterhalb der Drehachse der Auswurftrommel 66, ein als Ganzes um die Drehachse der Auswurftrommel 66 schwenkbares Strohleitelement 68 an. Das Strohleitelement 68 kann um diese Achse zwischen der in der Figur 1 dargestellten Langstrohablageposition und einer Häckselposition verschwenkt werden, in der es um etwa 45° nach hinten verschwenkt wird und in der der erste Erntegutrestestrom in einen Strohhäcksler 70 gelangt.

Unterhalb und geringfügig hinter der Auswurftrommel 66 ist in einem Gehäuse 72 ein an sich bekannter Strohhäcksler 70 angeordnet, der um eine horizontale, quer zur Fahrtrichtung verlaufende Achse (in der Figur 1 im Gegenuhrzeigersinn) durch einen Antrieb in Drehung versetzbar ist. Er umfasst einen zylindrischen Körper mit pendelnd daran aufgehängten Häckselmessern, die mit im Gehäuse 72 angeordneten stationären Gegenmessern zusammenwirken, um die Erntegutreste zu häckseln und mittels einer mit Strohleitblechen 82 ausgestatteten Strohverteilerhaube 74 etwa über die Schnittbreite des Mähdreschers 10 auf dem Feld zu verteilen.

Das Strohleitelement 68 ist kreisbogenförmig gekrümmt und umschließt die Auswurftrommel 66 um einen Winkelbereich von etwa 45° konzentrisch. Es ist an seinen in Querrichtung äußeren Enden schwenkbar am Tragrahmen 12 des Mähdreschers 10 angelenkt. Das Strohleitelement 68 erstreckt sich in der in Figur 1, wiedergegebenen Langstrohablageposition von der vorderen Wand 62 bis etwa über die Drehachse des Strohhäckslers 70. In dieser Position bewirkt das Strohleitelement 68, dass die ausgedroschenen Erntegutreste von der Auswurftrommel 66 unterhalb einer Auswurfhaube 76 schräg nach hinten und unten abgegeben werden.

Die Spreufördereinrichtung 84 erstreckt sich vom hinteren, unteren Ende der Reinigungseinrichtung 34 schräg nach hinten und oben bis zu einem Häckslereinlass 88, der als eine sich über die Breite des Auswurfschachts und des Strohhäckslers 70 erstreckende Öffnung zwischen dem unteren Ende der vorderen Wand 62 des Auswurfschachts und dem oberen Ende des Gehäuses 72 des Strohhäckslers 70 gestaltet ist. Spreu und andere Kurzstrohanteile, die von der Reinigungseinrichtung 34 an deren hinterem Ende durch die Wirkung des Gebläses 36 und durch die Schwerkraft auf die Spreufördereinrichtung 84 abgegeben werden, wandern auf der Spreufördereinrichtung 84 nach hinten und oben, wo sie durch den Häckslereinlass 88 abgegeben werden und in den Strohhäcksler 70 hinein gelangen. Der Strohhäcksler 70 wird auch in der Stellung des Leitblechs 68, wie sie in der Figur 1 dargestellt ist, in Antrieb versetzt. Er übt eine Förderwirkung auf die Spreu und die Kurzstrohanteile auf, die dazu hinreicht, sie entlang der Strohleitbleche 82 zu fördern und hinter dem Mähdrescher 10 auf dem Feld auszustoßen.

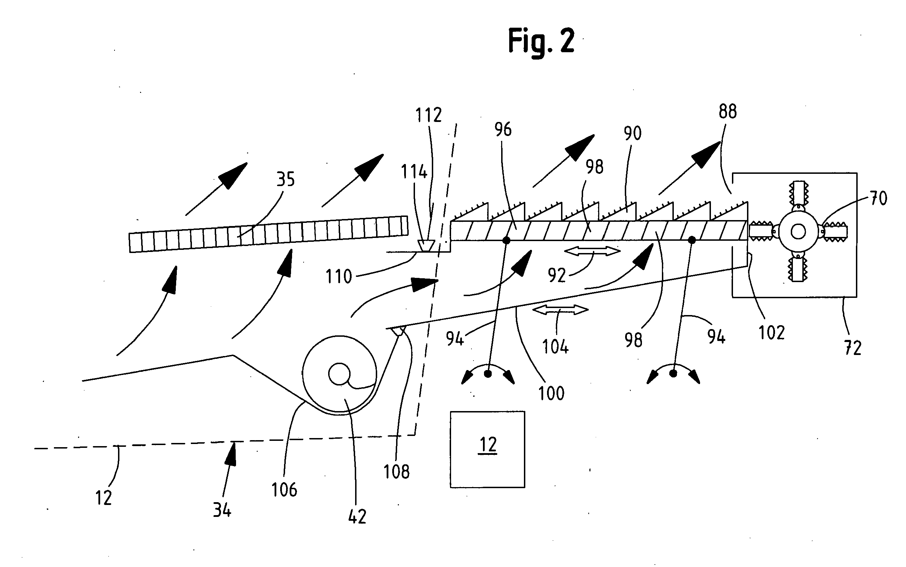

Es wird nun auf die Figur 2 Bezug genommen, anhand der erkennbar ist, dass die Spreufördereinrichtung 84 durch geeignete Antriebe, z. B. Exzenter, ähnlich dem Schüttelboden 32 entlang seiner Längsrichtung in eine hin- und hergehende Schwingbewegung versetzt wird, wie durch den Pfeil 92 angedeutet. Die Spreufördereinrichtung 84 ist durch Kurbelarme 94 am Rahmen 12 des Mähdreschers 10 abgestützt.

Die Spreufördereinrichtung 84 umfasst einen flachen Belag 96, der mit Öffnungen 98 durchsetzt ist, die z. B. zwischen sich schräg nach hinten und oben erstreckenden Lamellen (d. h. wie bei einem Sieb 35 der Reinigungseinrichtung 34) oder mit aufgebogenen Blechlaschen, Nasen oder Ausstanzungen gebildet werden. An der Oberseite des Belags 96 sind seitlich nebeneinander mehrere sägezahnförmige Stege 90 angebracht, deren längere, mit gezackten Oberseiten versehene Flanken schräg nach hinten ansteigen, während die demgegenüber kürzeren Flanken relativ steil nach hinten abfallen.

Unterhalb der Spreufördereinrichtung 84 ist eine Rückfördereinrichtung 100 angeordnet, die einen nach hinten und oben geneigten Förderboden umfasst, der sich über die gesamte Breite und Länge der Spreufördereinrichtung 84 erstreckt und am rückwärtigen Ende durch eine senkrechte Wand 102 mit dem rückwärtigen Ende der Spreufördereinrichtung 84 verbunden ist. Da die Rückfördereinrichtung 100 mit der Spreufördereinrichtung fest verbunden ist, führen sie eine gemeinsame Schwingbewegung aus, wie anhand des Pfeils 92 für die Spreufördereinrichtung 84 und des Pfeils 104 für die Rückfördereinrichtung 100 angedeutet. An ihrem vorderen Ende erstreckt sich der Förderboden der Rückfördereinrichtung 100 bis über das rückwärtige Ende eines Bodenblechs 106 eines Gehäuses der Reinigungseinrichtung 34, über dem die Überkehrschnecke 42 angeordnet ist. Zwischen dem rückwärtigen Ende des mit dem Rahmen 12 verbundenen Bodenblechs 106 und dem darüber angeordneten Bereich der gegenüber dem Rahmen 12 oszillierenden Rückfördereinrichtung 100 ist eine Dichtung 108 angeordnet, die unerwünschte Windverluste des Gebläses 36 vermeidet. Die Oberfläche des Förderbodens der Rückfördereinrichtung ist vorzugsweise mit geeigneten Zacken oder Stufen versehen, um den Transport der Körner zur Reinigungseinrichtung 34 zu verbessern.

An der Vorderseite der Spreufördereinrichtung 84 ist ein L-förmiges Leitblech 110 angebracht, dessen längere Fläche sich etwa horizontal und etwas niedriger als die Ebene des Belags 96 erstreckt. Oberhalb dieser Fläche ist ein mit dem Rahmen 12 verbundenes, sich vertikal erstreckendes Blech 112 angeordnet, an dessen Unterseite eine an der längeren Fläche des Leitblechs 110 anliegende Dichtung 114 angebracht ist.

Die dargestellte Anordnung der Spreufördereinrichtung 84 und der Rückfördereinrichtung 100 bewirken, dass die Spreufördereinrichtung 84 von unten her mit Wind vom Gebläse 36 der Reinigungseinrichtung 34 und zusätzlich mit einem in dieselbe Richtung wirkenden Sog vom Strohhäcksler 70 beaufschlagt wird, so dass ein Luftstrom durch die Öffnungen 98 des Belags 96 der Spreufördereinrichtung 84 entsteht. Das Leitblech 110 und die Dichtungen 108, 114 verstärken den Luftstrom bzw. verhindern eine unerwünschte Abschwächung. Die in eine Schwingbewegung versetzte Spreufördereinrichtung 84 wirkt demnach als Abscheideeinrichtung, die eventuell in der von der Reinigungseinrichtung 34 abgegebenen Spreu enthaltene Körner abtrennt und durch die Öffnungen 98 des Belags 96 treten lässt, die Spreu aber nicht durchlässt. Die Stege 90 lockern die Gutmatte an der Oberseite des Belags 96 auf, was die Abscheidewirkung weiter verbessert.

Die abgeschiedenen Körner werden durch die Rückfördereinrichtung 100 nach vorn und unten in die Reinigungseinrichtung 34 gefördert und dort der Überkehrschnecke 42 aufgegeben, die sie wieder der Drescheinrichtung 20 zuführt.

Die beschriebene Spreufördereinrichtung 84 bewirkt demnach eine Vergrößerung der Abscheidefläche der Reinigungseinrichtung 34, ohne ihren Platzbedarf zu vergrößern, was zu einer Verringerung der Kornverluste und/oder Vergrößerung des erzielbaren Durchsatzes des Mähdreschers 10 führt. Die Rückfördereinrichtung führt die Körner direkt oder indirekt in die Reinigungseinrichtung 34 zurück.

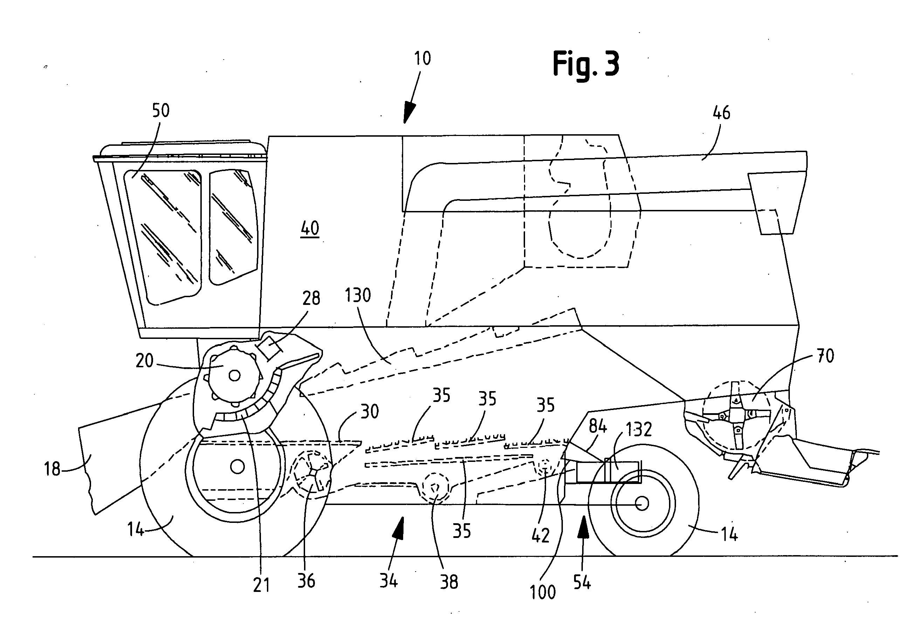

Die Figur 3 zeigt eine zweite Ausführungsform eines Mähdreschers 10. Mit der ersten Ausführungsform übereinstimmende Elemente sind mit denselben Bezugszeichen gekennzeichnet. Als wesentliche Unterschiede zur ersten Ausführungsform sind ein Strohschüttler 130 zu erwähnen, der hier als Trenneinrichtung dient, sowie ein Spreuverteiler 132, der als Abgabeförderer zur Verteilung der von der Reinigungseinrichtung 34 abgegebenen Spreu über das Feld dient und in an sich bekannter Weise zwei nebeneinander angeordnete, um vertikale Achsen drehbar antreibbare Teller mit darauf befestigten Mitnehmern umfasst, die als Gebläse dienen. Die Spreufördereinrichtung 84 fördert somit die Spreu von der Reinigungseinrichtung 34 dem Spreuverteiler 132 zu. Die Rückfördereinrichtung 100 ist unterhalb der Spreufördereinrichtung 84 angeordnet und fördert die von der Spreufördereinrichtung 84 abgeschiedenen Körner der Überkehrschnecke 42 zu.

## Patentansprüche

1. Mähdrescher (10) mit einer Drescheinrichtung (20), einer Trenneinrichtung (24), einer Reinigungseinrichtung (34), einem zur Verteilung der von der Reinigungseinrichtung (34) abgegebenen Spreu über ein Feld dienenden Abgabeförderer und einer von der Reinigungseinrichtung (34) getrennten Spreufördereinrichtung (84) zur mechanischen Förderung der von der Reinigungseinrichtung (34) abgegebenen Spreu zum Abgabeförderer, **dadurch gekennzeichnet, dass** die Spreufördereinrichtung (84) zur Abscheidung von Körnern eingerichtet ist und dass der Spreufördereinrichtung (84) eine Rückfördereinrichtung (100) zur Rückförderung der durch die Spreufördereinrichtung (84) abgeschiedenen Körner zur Reinigungseinrichtung (34) zugeordnet ist.

2. Mähdrescher (10) nach Anspruch 1, **dadurch gekennzeichnet, dass** der Abgabeförderer ein Spreuverteiler (132) oder ein Strohhäcksler (70) ist.

3. Mähdrescher (10) nach Anspruch 1 oder 2, **dadurch gekennzeichnet, dass** die Spreufördereinrichtung (84) mit sägezahnförmigen Stegen (90) ausgestaltet ist.

4. Mähdrescher (10) nach einem der Ansprüche 1 bis 3, **dadurch gekennzeichnet, dass** die Spreufördereinrichtung (84) in eine Schwingbewegung bringbar ist.

5. Mähdrescher (10) nach einem der vorhergehenden Ansprüche, **dadurch gekennzeichnet, dass** die Rückfördereinrichtung (100) die Körner einer Überkehrfördereinrichtung (42) zuführt.

6. Mähdrescher (10) nach einem der vorhergehenden Ansprüche, **dadurch gekennzeichnet, dass** die Rückfördereinrichtung (100) einen in eine Schwingbewegung bringbaren Förderboden umfasst.

7. Mähdrescher (10) nach einem der vorhergehenden Ansprüche, **dadurch gekennzeichnet, dass** die Rückfördereinrichtung (100) und die Spreufördereinrichtung (84) antriebsmäßig miteinander gekoppelt sind.

8. Mähdrescher (10) nach einem der vorhergehenden Ansprüche, **dadurch gekennzeichnet, dass** die Spreufördereinrichtung (84) von unten her mit Wind von einem Gebläse (36) der Reinigungseinrichtung (36) und/oder von oben her mit einem durch den Abgabeförderer erzeugten Sog beaufschlagbar ist.

9. Mähdrescher (10) nach Anspruch 8, **dadurch gekennzeichnet, dass** ein einlassseitig an der Unterseite der Spreufördereinrichtung (84).angebrachtes Leitblech (110) den Wind von der Reinigungseinrichtung (34) zur Unterseite der Spreufördereinrichtung (84) lenkt.

10. Mähdrescher (10) nach einem der Ansprüche 8 oder 9, **dadurch gekennzeichnet, dass** eine Dichtung (108) zwischen einem Gehäuse der Reinigungseinrichtung (34) und der Unterseite der Rückfördereinrichtung (100) angeordnet ist.

## Claims

1. Combine harvester (10) with a threshing device (20), a separating device (24), a cleaning device (34), a discharge conveyor serving to distribute the chaff discharged by the cleaning device (34) over a field, and a chaff-conveying device (84) which is separate from the cleaning device (34) and is intended for the mechanical conveying of the chaff discharged by the cleaning device (34) to the discharge conveyor, **characterized in that** the chaff-conveying device (84) is set up to separate grains, and **in that** the chaff-conveying device (84) is assigned a return conveyor device (100) for conveying the grains separated by the chaff-conveying device (84) back to the cleaning device (34).

2. Combine harvester (10) according to Claim 1, **characterized in that** the discharge conveyor is a chaff distributor (132) or a straw chopper (70).

3. Combine harvester (10) according to Claim 1 or 2, **characterized in that** the chaff-conveying device (84) is equipped with serrated webs (90).

4. Combine harvester (10) according to one of Claims 1 to 3, **characterized in that** the chaff-conveying device (84) can be brought into an oscillatory motion.

5. Combine harvester (10) according to one of the preceding claims, **characterized in that** the return conveyor device (100) feeds the grains to a transfer conveyor device (42).

6. Combine harvester (10) according to one of the preceding claims, **characterized in that** the return conveyor device (100) comprises a conveyor base which can be brought into an oscillatory motion.

7. Combine harvester (10) according to one of the preceding claims, **characterized in that** the return conveyor device (100) and the chaff-conveying device (84) are coupled to each other in terms of drive.

8. Combine harvester (10) according to one of the preceding claims, **characterized in that** the chaff-conveying device (84) can be acted upon from below with wind from a blower (36) of the cleaning device (34) and/or from above with a suction generated by the discharge conveyor.

9. Combine harvester (10) according to Claim 8, **characterized in that** a baffle plate (110) attached on the inlet side to the lower side of the chaff-conveying device (84) deflects the wind from the cleaning device (34) to the lower side of the chaff-conveying device (84).

10. Combine harvester (10) according to either of Claims 8 and 9, **characterized in that** a seal (108) is arranged between a housing of the cleaning device (34) and the lower side of the return conveyor device (100).

## Revendications

1. Moissonneuse-batteuse (10) comprenant un dispositif de battage (20), un dispositif séparateur (24), un dispositif de nettoyage (34), un transporteur d'évacuation servant à distribuer dans un champ la vannure évacuée par le dispositif de nettoyage (34) et un dispositif de transport de vannure (84) pour le transport mécanique de la vannure évacuée par le dispositif de nettoyage (34) jusqu'au transporteur d'évacuation, **caractérisée en ce que** le dispositif de transport de vannure (84) est prévu pour séparer les grains et **en ce que** l'on associe au dispositif de transport de vannure (84) un dispositif de retour (100) pour ramener les grains séparés par le dispositif de transport de vannure (84) jusqu'au dispositif de nettoyage (34).

2. Moissonneuse-batteuse (10) selon la revendication 1, **caractérisée en ce que** le transporteur d'évacuation est un distributeur de vannure (132) ou un hache-paille (70).

3. Moissonneuse-batteuse (10) selon la revendication 1 ou 2, **caractérisée en ce que** le dispositif de transport de vannure (84) est muni de nervures en forme de dents de scie (90).

4. Moissonneuse-batteuse (10) selon l'une quelconque des revendications 1 à 3, **caractérisée en ce que** le dispositif de transport de vannure (84) peut être animé d'un mouvement oscillant.

5. Moissonneuse-batteuse (10) selon l'une quelconque des revendications précédentes, **caractérisée en ce que** le dispositif de retour (100) achemine les grains à un dispositif de transport de résidus (42).

6. Moissonneuse-batteuse (10) selon l'une quelconque des revendications précédentes, **caractérisée en ce que** le dispositif de retour (100) comprend un fond de transport pouvant être animé d'un mouvement oscillant.

7. Moissonneuse-batteuse (10) selon l'une quelconque des revendications précédentes, **caractérisée en ce que** le dispositif de retour (100) et le dispositif de transport de vannure (84) sont accouplés l'un à l'autre par entraînement.

8. Moissonneuse-batteuse (10) selon l'une quelconque des revendications précédentes, **caractérisée en ce que** le dispositif de transport de vannure (84) peut être sollicité par le dessous avec du vent d'une soufflante (36) du dispositif de nettoyage (34) et/ou par le haut avec un appel d'air produit par le transporteur d'évacuation.

9. Moissonneuse-batteuse (10) selon la revendication 8, **caractérisée en ce qu'**une tôle directrice (110) montée du côté de l'entrée au niveau du côté inférieur du dispositif de transport de vannure (84) dirige le vent du dispositif de nettoyage (34) vers le côté inférieur du dispositif de transport de vannure (84).

10. Moissonneuse-batteuse (10) selon la revendication 8 ou 9, **caractérisée en ce qu'**un joint d'étanchéité (108) est disposé entre un boîtier du dispositif de nettoyage (34) et le côté inférieur du dispositif de retour (100).
